# EUROPEAN PATENT SPECIFICATION

(11) **EP 1 317 100 B1**
(45) Date of publication and mention of the grant of the patent: **03.09.2014**
(21) Application number: 02258193.8
(22) Date of filing: 28.11.2002
(51) Int. Cl.: H04L 12/24, H04L 29/14, H04L 12/423, H04L 12/437, H04L 12/403

(54) **Fault management in a serial data communication system with parent and child stations using polling**
Fehlerbehandlung in einem seriellen Kommunikationssystem mit Haupt- und Nebenstationen mittels Abfragen
Gestion des erreurs dans un système de communication sérielle avec stations maître et esclave et utilisant le sondage

(30) Priority: 28.11.2001 JP 2001363278
(43) Date of publication of application: 04.06.2003
(73) Proprietor: NEC Corporation, Minato-ku Tokyo 108-8001 (JP)
(72) Inventor: Watanabe, Gaku, Minato-ku, Tokyo (JP)
(74) Representative: MacDougall, Alan John Shaw

(56) References cited:
- EP-A- 0 498 751
- DE-A- 19 714 761
- DE-A- 19 923 594
- US-B1- 6 295 558
- PATENT ABSTRACTS OF JAPAN vol. 2000, no. 21, 3 August 2001 (2001-08-03) -& JP 2001 111581 A (NEC CORP), 20 April 2001 (2001-04-20)

## Description

### BACKGROUND OF THE INVENTION

The present invention relates to a data communication system, in which plural stations having two two-directional external interfaces are connected in series and one of the plural stations is made to be a parent station (master station) and the others are made to be child stations (slave stations), and the parent station collects data from each of the child stations by polling.

### Description of the Related Art

Conventionally, this kind of data communication system is used such that a parent station collects data from each of plural child stations by polling on a network in which plural stations having two two-directional external interfaces are connected in series.

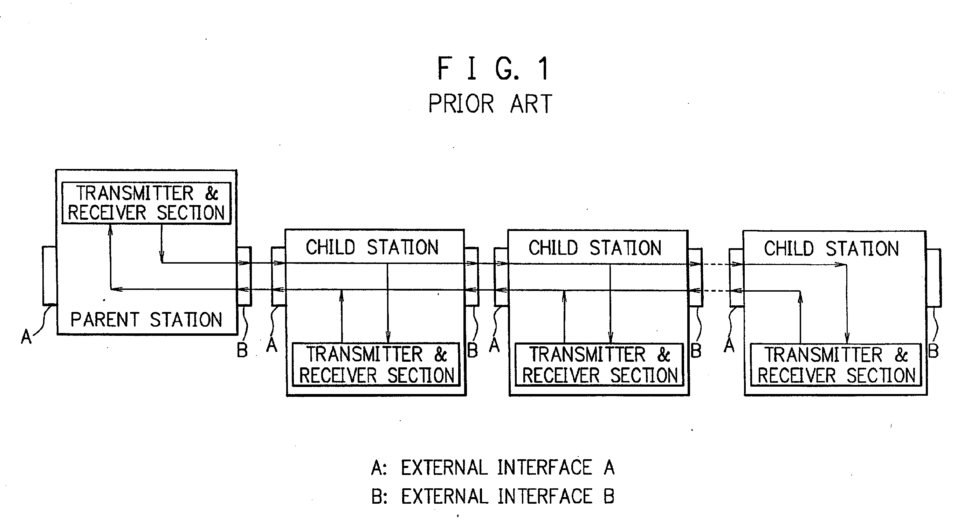

Fig. 1 is a block diagram showing a structure of a conventional data communication system. Referring to Fig. 1, the conventional data communication system is explained.

In Fig. 1, a station located at the end of the network is made to be a parent station, and the parent station transmits polling data to a child station located next to the parent station. The child station transmits the polling data from the parent station received at the external interface A to the external interface B as they are. And the child station located next to the parent station transmits the polling data to a child station following this child station. By continuing this operation, the polling data from the parent station are transmitted to all of the child stations, and the polling data are received at each transmitter & receiver section of all the child stations. Each of the child stations judges whether the polling data is for its own child station or not by the address in the polling data. When the address is for the child station, the child station responds to the polling data, and when the address is not for the child station, the child station discards the polling data.

The data responded by a child station is transmitted to the next child station of the parent station side. The next child station receives the data at the external interface B and transmits the received data to the external interface A as they are. By continuing this operation, the parent station receives the data from each of the child stations. In this case, the inside connections between the transmitter & receiver section and the external interfaces are different between the parent station and each of the child stations. Further, there is a problem that the external interfaces A of the adjacent two stations cannot be connected with each other and also that the external interfaces B of the adjacent two stations cannot be connected with each other.

In order to solve this problem, Japanese Patent Application Laid-Open No. 2001-111581 discloses a data communication system and a method thereof. Fig. 2 is a block diagram showing a structure of a station in this patent application. In this conventional data communication system, plural stations having a transmitter & receiver section, connecting to two two-directional external interfaces, are connected in series, and a parent station collects data from each of plural child stations by polling.

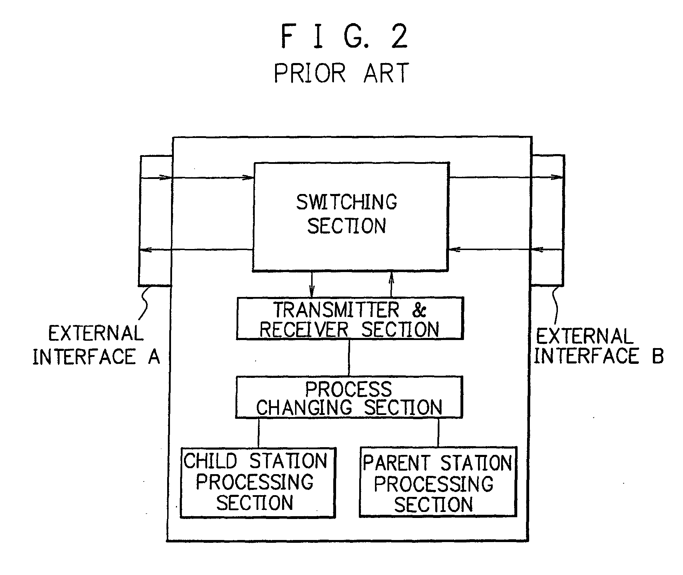

As shown in Fig. 2, the station consists of a switching section, external interfaces A and B, a transmitter & receiver section, a process changing section, a parent station processing section, and a child station processing section. The switching section switches transmission lines and reception lines among the three sections of the two two-directional external interfaces A and B and the transmitter & receiver section corresponding to one of switching patterns. The process changing section makes the station work as a parent station or a child station by connecting the parent-station processing section or the child-station processing section to the transmitter & receiver section, based on whether the station is the parent station or the child station. Further, the same external interfaces in the station and the adjacent station can be connected by the process-changing section switching the switching section.

As mentioned above, in the conventional datacommunication system, plural stations that each have a transmitter-and-receiver section connecting to two bidirectional external interfaces are connected in series; a parent station in the plural stations collects data from the other stations (child stations) by polling. Each of the stations is made to function as a parent station or a child station by the process-changing section of that station, which connects the parent-station processing section or the child-station processing section of that station to the transmitter-and-receiver section of that station. Further, by switching the switching section, the process-changing section makes the adjacent stations connect with matching external interfaces. Consequently, for example, when a disconnection causes communication between a particular child station and the parent station to be broken such that the particular child station does not receive polling from the parent station, child stations more remote from the parent station than the particular child station can no longer receive polling data and are thus not prompted to transmit data of their own station to the parent station. Therefore, there is the problem that, following a disconnection between the parent and a particular child station, the parent station no longer receives data from the child stations more remote from it than the particular station.

DE 199 23 594 A (Yazaki) discloses a multiplex communications system that includes a plurality of master-slave subsystems consisting of master and slave nodes. Each master node transmits a signal to a slave node of the same sub-system. If transmission between a master and a slave node is not correctly carried out at a first cycle, a second longer cycle is used. A third even longer cycle is also possible.

### SUMMARY OF THE INVENTION

It is therefore an object of the preferred embodiments of the present invention to provide a data communication system, in which, even when communication between a child station and a parent station is broken in that the child station could not receive polling from the parent station caused by an event such as disconnection, data from child stations following the child station whose communication was broken can be collected.

According to a first aspect of the present invention, there is provided a data communication system, including three or more stations connected in series. Each station includes: a pair of two-directional external interfaces, each interface connecting to an external interface of an adjacent station; a pair of transmitter-and-receiver sections each section transmitting and receiving data by connecting to a respective one of the pair of two-directional external interfaces; a switching section that switches transmission lines and reception lines between the pair of two-directional external interfaces and the pair of transmitter-and-receiver sections according to a switching request; and, a process-changing section that has a plurality of predetermined switching patterns and selects one of said switching patterns corresponding to a parent or child state assigned to its own station, and outputs said switching request based on a selected one of said switching patterns, and sets each transmitter-and-receiver section in an operative state or a non-operative state, and when one or both transmitter-and-receiver sections is in the operative state, changes the process determining whether data received at that one or both transmitter-and-receiver sections are processed for a parent station or a child station. Initially, a predetermined one of the stations is assigned to be a parent station, and the other stations are each assigned to be a child station for the parent station. The parent station utilizes one of its external interfaces to poll each of the child stations, and upon being polled by the parent station, each of the child stations utilizes one of its external interfaces to transmit data of its own station to the parent station. When one of the child stations, other than the child station most remote from the parent station, has not been polled for a predetermined period by the parent station, that particular child station, whilst remaining as a child station, also works as a second parent station by utilizing the other of its external interfaces to poll a child station or stations more remote from the parent station than the particular child station, and when the particular child station is polled by the parent station after starting to work as the second parent station, the particular child station stops working as the second parent station.

Preferably, the parent station is located as an end one of the stations connected in series. More preferably, the closer in serial connection the particular child station is to the parent station, the shorter is the predetermined period.

Each station may further include: a parent-station processing section having a function of, when said station functions as a parent station, applying polling sequentially to each child station, and collecting data from each of the child stations by the polling; and, a child-station processing section having afunction oftransmitting, upon being polled, data of its own station to a polling-source station. When the data, which is received at one of said pair of transmitter-and-receiver sections in the operative state, is processed by a station acting as a parent station, the process-changing section connects that transmitter-and-receiver section to the parent-station processing section, and when the data, which is received at one of the pair of transmitter-and-receiver sections in the operative state, is processed by a station acting as a child station, the process-changing section connects that transmitter-and-receiver section to the child-station processing section.

The process-changing section may select one of the plurality of switching patterns, based on whether its own station is the parent station or one of the child stations and on the position of its own station in the stations connected in series, and on whether a two-directional external interface of its own station and a connected two-directional interface of an adjacent station are in a same direction.

Preferably, in the data communication system: one of the pair of two-directional external interfaces of each station is a first external interface, and the otherofthe pairoftwo-directional external interfaces of each station is a second external interface; one of the pair of transmitter-and-receiver sections of each station is a first transmitter-and-receiver section that receives data from the first external interface and transmits data to the second external interface; and, the other of the pair of transmitter-and-receiver sections is a second transmitter-and-receiver section that receives data from the second external interface and transmits data to the first external interface. More preferably, the plurality of predetermined switching patterns of the process-changing section include first, second and third switching patterns. The first switching pattern is selectable for stations acting as child stations, in which the reception line of said first external interface is connected to the reception line of the first transmitter-and-receiver section and to the transmission line of the second external interface, and the reception line of the second external interface and the transmission line of the first transmitter-and-receiver section are connected to the transmission line of the first external interface, and the first transmitter-and-receiver section is made to be in the operative state and the second transmitter-and-receiver section is made to be in the non-operative state. The second switching pattern is selectable for stations acting as child stations, in which the reception line of the first external interface and the transmission line of the second transmitter-and-receiver section are connected to the transmission line of the second external interface, and the reception line of the second external interface is connected to the reception line of the second transmitter-and-receiver section and the transmission line of the first external interface, and the first transmitter-and-receiver section is made to be in the non-operative state and the second transmitter-and-receiver section is made to be in the operative state. The third switching pattern is selectable for a station acting as a parent station or a second parent station, or for a child station located as an end one of the stations connected in series, in which the reception line of the first external interface is connected to the reception line of the first transmitter-and-receiver section, and the transmission line of the first transmitter-and-receiver section is connected to the transmission line of the first external interface, and the reception line of the second external interface is connected to the reception line of the second transmitter-and-receiver section, and the transmission line of the second transmitter-and-receiver section is connected to the transmission line of the second external interface, and both of the first and second transmitter-and-receiversections are made to be in the operative state.

Even more preferably, the particular station, which is initially assigned to be a child station, is adapted to switch the transmission and reception lines at its process-changing section for using the third switching pattern, and to connect, to its parent-station processing section, the transmitter-and-receiver section on the side connecting to the more-remote child station or stations, and then to work as the second parent station. Even still more preferably, each of the stations that is to work as a child station is adapted to switch the transmission-and-reception lines at its respective process-changing section by using the first or second switching pattern, and to connect that one of its transmitter-and-receiver sections that is in the operative state to the child-station processing section, and then to work as a child station.

Yet more preferably, the process-changing section of the particular child station functions such that: when the particular child station has not been polled via the transmitter-and-receiver section in the operative state for a predetermined period, a processing section of the particularchild station informs the process-changing section of the particular child station that there has been no such polling; when the particular child station is afterwards polled, the processing section informs the process-changing section that the polling has recommenced; and, when the process-changing section of the particular child station is informed by the processing section that the particular child station has not been polled, the process-changing section executes switching based on the third switching pattern, and connects the parent-station processing section to the transmitter-and-receiver section that has been newly-set to be in the operative state; and, the particular child station functions such that: when the process-changing section of the particular child station is informed by the processing section that the particular child station has started to again be polled, the process-changing section executes switching based on the first or second switching pattern, and returns to the state that existed before execution of the third switching pattern, by disconnecting the parent-station processing section from the transmitter-and-receiver section that was newly-set to be in the operative state; and, when the parent-station processing section is connected to the transmitter-and-receiver section that was newly-set to be in the operative state, the particular child station collects data from the child station or stations more remote than the particular child station by polling as the second parent station; and, when the transmitter-and-receiver section that was newly-set to be in the operative state is disconnected by the process-changing section, the particular child station stops working as the second parent station.

### BRIEF DESCRIPTION OF THE DRAWINGS

Preferred features of the present invention will now be described, byway of example only, with reference to the accompanying drawings, in which:-
Fig. 1 is a block diagram illustrating the structure of a conventional data communication system;
Fig. 2 is a block diagram illustrating a station structure in Japanese Patent Application Laid-Open No. 2001-111581;
Fig. 3A is a block diagram showing an embodiment of a data communication system of the present invention;
Fig. 3B is a block diagram showing a structure of each station using in embodiments of the data communication system of the present invention;
Fig. 4 is a diagram showing examples of switching patterns selecting by a process changing section shown in Fig. 3B;
Fig. 5 is a diagram showing a structure of a first embodiment of the data communication system of the present invention; and
Fig. 6 is a diagram showing a structure of a second embodiment of the data communication system of the present invention.

### DESCRIPTION OF THE PREFERRED EMBODIMENTS

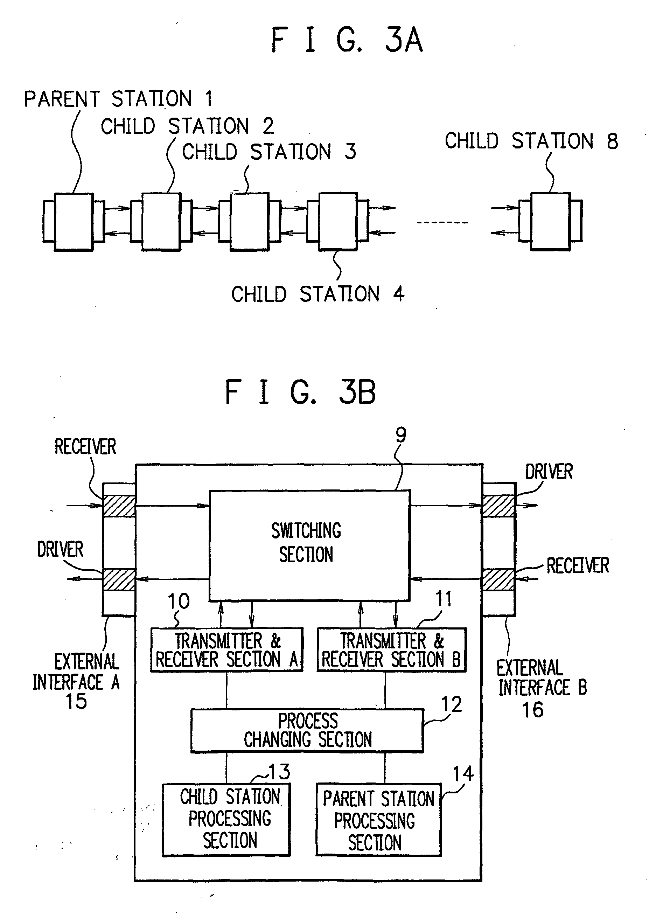

Referring now to the drawings, embodiments of the present invention are explained in detail. Fig. 3A is a block diagram showing an embodiment of a data communication system of the present invention. As shown in Fig. 3A, at the embodiment of the data communication system of the present invention, plural stations (for example, eight stations) having two two-directional external interfaces are connected in series in a network, and one of the plural stations is made to be a parent station 1 and the other stations 2 to 8 are made to be child stations. The parent station 1 collects data from each of the child stations 2 to 8 by polling. Each of the child stations 2 to 8 transmits its own data to the source of polling when received the polling, and when a child station has not received any polling for a predetermined period, the child station continues to work as the child station and also works as the second parent station for the child stations following the child station. And the child station collects data from the child stations following the child station as the second parent station by polling. And when the child station received polling from the parent station after worked as the second parent station, the child station stops working as the second parent station. However, in this case, the right end station being the child station 8 cannot be the second parent station. In this, the predetermined period is, for example, 30 seconds to 60 seconds, however, this period is not limited to the values mentioned above and can be decided by an experiment. At the embodiment of the present invention, it is shown that the number of stations is eight, however, the number of the stations is not limited to eight and the number of the stations can be decided arbitrary.

In Fig. 3A, for example, a station located at the end (for example, the left end) of the plural stations connected in series is made to be the parent station 1. The predetermined period, which one of the child stations has not received the polling and becomes the trigger to start to work as the second parent station, is decided as follows: the closer the child station to the parent station is, the shorter the predetermined period is. In this, the child station 8 does not work as the second parent station.

Fig. 3B is a block diagram showing a structure of each station using in the embodiments of the data communication system of the present invention. As shown in Fig. 3B, each of the parent station 1 and the child stations 2 to 8 shown in Fig. 3A consists of a switching section 9, a transmitter & receiver section A 10, a transmitter & receiver section B 11, a process changing section 12, a child station processing section 13, a parent station processing section 14, an external interface A 15, and an external interface B 16.

Each of the external interfaces A 15 and B 16 is a two-directional interface, and has a receiver for converting received data and a driver for converting data into transmitting data. The transmitter & receiver section A 10 receives data from the external interface A 15 and transmits data to the external interface A 15 by connecting to the external interface A 15 via the switching section 9. The transmitter & receiver section B 11 receives data from the external interface B 16 and transmits data to the external interface B 16 by connecting to the external interface B 16 via the switching section 9. The switching section 9 switches transmission lines and reception lines among four sections of the external interfaces A 15 and B 16 and the transmitter & receiver sections A 10 and B 11, corresponding to a switching request. The process changing section 12 has plural switching patterns beforehand, and selects one of the plural switching patterns corresponding to the state of the station itself, and outputs a switching request to the switching section 9 based on the selected switching pattern. Further, the process changing section 12 sets the transmitter & receiver sections A 10 and B 11 in a using state or a non-using state individually, and when a transmitter & receiver section, which was set in the using state, exists, the process changing section changes whether the data receiving at this transmitter & receiver section are processed for a parent station or a child station. That is, the process changing section 12 connects this transmitter & receiver section to the parent station processing section 14, when the data receiving at the transmitter & receiver section set in the using state are processed for the parent station. And the process changing section 12 connects this transmitter & receiver section to the child station processing section 13, when the data receiving at the transmitter & receiver section set in the using state are processed for the child station. The parent station processing section 14 has a function to apply polling to the child stations 2 to 8 sequentially and to collect data from each of the child stations 2 to 8. The child station processing section 13 has a function to transmit data from the station itself to the source station of the polling, when the station received the polling.

The process changing section 12 selects one switching pattern from the plural switching patterns based on the following conditions. The station itself is the parent station 1 or one of the child stations 2 to 8. What position is the station itself located in the plural stations connected in series. And the external interface of the adjacent station and the external interface of the station itself, which connects to the external interface of the adjacent station, have the same direction or not.

Next referring to the drawings, the operation at the embodiments of the data communication system of the present invention is explained.

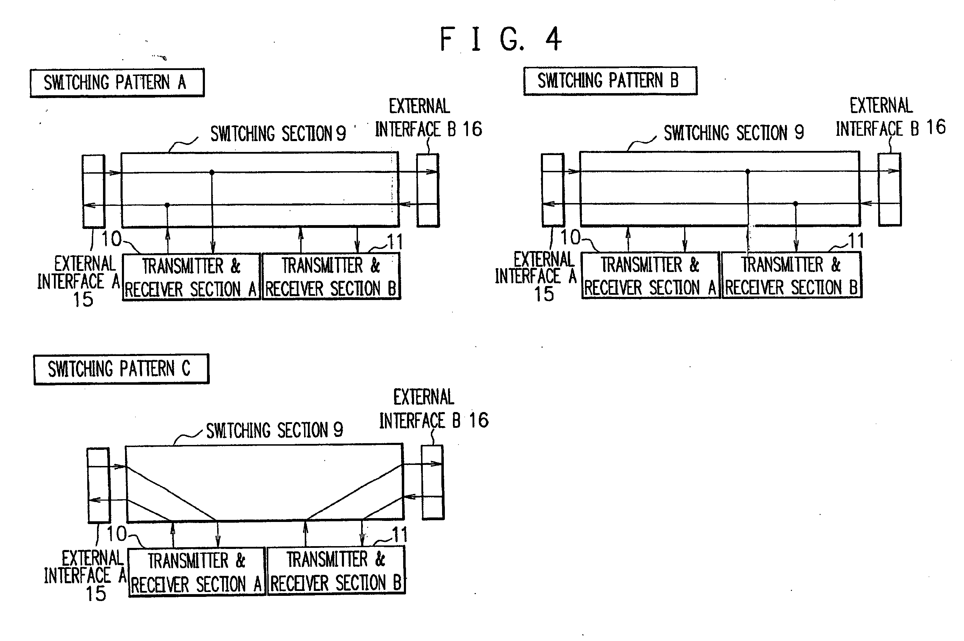

Fig. 4 is a diagram showing examples of the switching patterns selecting by the process changing section 12 shown in Fig. 3B. In Fig. 4, three switching patterns A, B, and C are shown.

At the switching pattern A for the child stations, the reception line of the external interface A 15 is connected to the reception line of the transmitter & receiver section A 10 and the transmission line of the external interface B 16, and the reception line of the external interface B 16 and the transmission line of the transmitter & receiver section A 10 are connected to the transmission line of the external interface A 15. With this connection, the transmitter & receiver section A 10 is made to be in the using state and the transmitter & receiver section B 11 is made to be in the non-using state.

At the switching pattern B for the child stations, the reception line of the external interface A 15 and the transmission line of the transmitter & receiver section B 11 are connected to the transmission line of the external interface B 16, and the reception line of the external interface B 16 is connected to the reception line of the transmitter & receiver section B 11 and the transmission line of the external interface A 15. With this connection, the transmitter & receiver section A 10 is made to be in the non-using state and the transmitter & receiver section B 11 is made to be in the using state.

At the switching pattern C for the parent station or the child station located at the end of the network, the reception line of the external interface A 15 is connected to the reception line of the transmitter & receiver section A 10, and the transmission line of the transmitter & receiver section A 10 is connected to the transmission line of the external interface A 15, and the reception line of the external interface B 16 is connected to the reception line of the transmitter & receiver section B 11, and the transmission line of the transmitter & receiver section B 11 is connected to the transmission line of the external interface B 16. With this connection, both of the transmitter & receiver sections A 10 and B 11 are made to be in the using state.

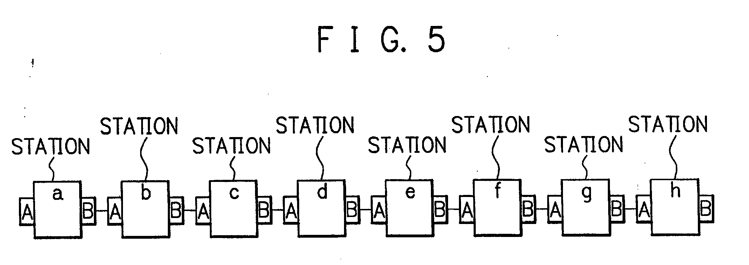

Fig. 5 is a diagram showing a structure of a first embodiment of the data communication system of the present invention. As shown in Fig. 5, a parent station " a " is located at the left end of the network, and the adjacent stations are connected each other by the external interfaces A and B. That is, the stations are connected in a state that the stations are facing each other.

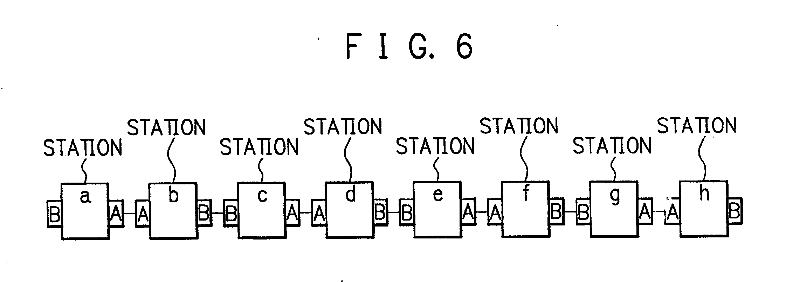

Fig. 6 is a diagram showing a structure of a second embodiment of the data communication system of the present invention. As shown in Fig. 6, a parent station " a " is located at the left end of the network, and the adjacent stations are connected each other by the external interfaces A and A, or by the external interfaces B and B. That is, the stations are connected in the inverse direction.

Referring to Figs. 3A, 3B, 4, and 5, the operation of the first embodiment of the data communication system of the present invention is explained. In Fig. 5, the adjacent stations are connected each other by the external interface A and the external interface B, and the station " a " is the parent station 1 and the stations " b " to " h " are the child stations 2 to 8 in Fig. 3A. The station " a " is the parent station 1 and is located at the left end of the network, and the external interface B of the station " a " is connected to the external interface A of the adjacent station " b ". Therefore, the process changing section 12 in the station " a " selects the switching pattern C shown in Fig. 4, and executes the switching operation. That is, the process changing section 12 outputs a switching request, showing that the switching is executed by the switching pattern C, to the switching section 9. With this, the transmitter & receiver section A 10 and the transmitter & receiver section B 11 are made to be in the using state, and the parent station processing section 14 is started by connecting the parent station processing section 14 to the transmitter & receiver section B 11. At this time, the transmitter & receiver section A 10 is not used.

The switching section 9 switches transmission lines and reception lines among four sections of the external interfaces A 15 and B 16 and the transmitter & receiver sections A 10 and B 11, corresponding to the switching pattern C shown in Fig. 4.

The station " b " is the child station 2, and is not located at the end of the network, and is connected to the adjacent stations with the external interfaces A 15 and B 16. Therefore, the process changing section 12 in this station " b " selects the switching pattern A shown in Fig. 4 and executes the switching operation. That is, the process changing section 12 outputs a switching request, showing that the switching is executed by the switching pattern A, to the switching section 9. With this, the transmitter & receiver section A 10 is made to be in the using state and the transmitter & receiver section B 11 is made to be in the non-using state, and the child station processing section 13 is started by connecting the child station processing section 13 to the transmitter & receiver section A 10.

The switching section 9 switches transmission lines and reception lines among four sections of the external interfaces A 15 and B 16 and the transmitter & receiver sections A 10 and B 11, corresponding to the switching pattern A shown in Fig. 4.

For each of the stations " c " to " g ", the same operation applied to the station " b " is executed by using the switching pattern A.

The station " h " is the child station 8, and is located at the right end of the network, and the external interface A of the station " h "is connected to the external interface B of the adjacent station " g ". Therefore, the process changing section 12 in the station " h " selects the switching pattern C shown in Fig. 4, and executes the switching operation. That is, the process changing section 12 outputs a switching request, showing that the switching is executed by the switching pattern C, to the switching section 9. With this, the transmitter & receiver section A 10 and the transmitter & receiver section B 11 are made to be in the using state, and the child station processing section 13 is started by connecting the child station processing section 13 to the transmitter & receiver section A 10. At this time, the transmitter & receiver section B 11 is not used.

The switching section 9 switches transmission lines and reception lines among four sections of the external interfaces A 15 and B 16 and the transmitter & receiver sections A 10 and B 11, corresponding to the switching pattern C shown in Fig. 4.

Next, the parent station processing section 14 in the parent station 1 applies the polling to all of the child stations 2 to 8 sequentially and collects data from each of the child stations 2 to 8. That is, the parent station processing section 14 transmits a polling packet to the network via the transmitter & receiver section B 11, the switching section 9, and the external interface B 16. In this, a packet is composed of, for example, a source address, a destination address, the kinds of data, and data. And in the kinds of data, there are polling data from the parent station and data responded to the polling from the child stations, and the polling packet is a packet whose kinds of data is the polling data.

The child station 2 receives this polling packet at the transmitter & receiver section A 10 via the external interface A 15 and the switching section 9, and also transmits the received polling packet to the network via the external interface B 16. Each of the child stations 3 to 7, as the same as the child station 2, receives this polling packet at the transmitter & receiver section A 10 via the external interface A 15 and the switching section 9, and also transmits the received polling packet to the network via the external interface B 16. The child station 8 receives this polling packet at the transmitter & receiver section A 10 via the external interface A 15 and the switching section 9.

Each of the child station processing sections 13 in the child stations 2 to 8 judges whether the polling packet received at its own transmitter & receiver section A 10 is for its own station or not. And only when the received polling packet is for its own station, the child station transmits a packet responded to the polling (the kinds of data is data responded to the polling) to the network. For example, when this polling packet is for the child station 3, the child station processing section 13 in the child station 3 judges that this polling packet is for its own station, and the transmitter & receiver section A 10 in the child station 3 transmits a packet responded to the polling to the network via the switching section 9 and the external interface A 15. The child station 2 receives the packet responded to the polling from the child station 3 at the external interface B 16, and transmits the received packet responded to the polling to the network via the switching section 9 and the external interface A 15.

After this, the packet responded to the polling is transmitted as follows: "the external interface A 15 in the child station 2" → "the external interface B 16 in the parent station 1" → "the switching section 9 in the parent station 1" → "the transmitter & receiver section B 11 in the parent station 1". And the parent station processing section 14 in the parent station 1 receives this packet responded to the polling from the transmitter & receiver section B 11 and collects data from the child station 3 in the packet responded to the polling. And the parent station 1 transmits a polling packet to the next child station.

Next, the operation, in case that the link between the parent station 1 and a child station was disconnected, is explained. For example, it is assumed that the connection between the child station 3 and the child station 4 was broken. The child station 4 is working in the switching pattern A as a child station. In case that the link between the parent station 1 and the child station 4 was disconnected, when the child station processing section 13 in the child station 4 has not received a polling packet from the parent station 1 via the transmitter & receiver section A 10 for a predetermined period, the child station processing section 13 informs the process changing section 12 about that the link between the parent station 1 and the child station 4 was disconnected (polling was not received).

The process changing section 12 selects the switching pattern C shown in Fig. 4 and works with this switching pattern C by receiving the disconnection of the link from the child station processing section 13. That is, the process changing section 12 outputs a switching request showing to switch to the switching pattern C to the switching section 9, and changes the transmitter & receiver section B 11 to the using state from the non-using state. And the process changing section 12 makes the parent station processing section 14 start by connecting the parent station processing section 14 to the transmitter & receiver section B 11.

The switching section 9 switches transmission lines and reception lines among four sections of the external interfaces A 15 and B 16 and the transmitter & receiver sections A 10 and B 11, corresponding to the switching pattern C shown in Fig. 4.

By the operation mentioned above, the child station 4 keeps the function as the child station with the external interface A 15, the transmitter & receiver section A 10, and the child station processing section 13, by waiting for the polling from the parent station 1. Further, the child station 4 has the function as the second parent station with the external interface B 16, the transmitter & receiver section B 11, and the parent station processing section 14. And the child station 4 sequentially applies polling to the child stations following the child station 4 (the child stations 5 to 8), and collects data from each of the child stations 5 to 8, by using the parent station processing section 14.

In case that the connection between the child stations 3 and 4 was recovered from the disconnection, the child station 4 can receive the polling packet from the parent station 1 again. When the child station processing section 13 in the child station 4 receives the polling packet from the parent station 1 via the external interface A 15 and the transmitter & receiver section A 10, the child station processing section 13 informs the process changing section 12 about the recovery of the link with the parent station 1 (receiving the polling packet again).

The process changing section 12 selects the switching pattern A shown in Fig. 4 and works with this switching pattern A by receiving the recovery of the link from the child station processing section 13. That is, the process changing section 12 outputs a switching request showing to switch to the switching pattern A to the switching section 9, and changes the transmitter & receiver section B 11 to the non-using state. And the process changing section 12 disconnects the parent station processing section 14 from the transmitter & receiver section B 11.

The switching section 9 switches transmission lines and reception lines among four sections of the external interfaces A 15 and B 16 and the transmitter & receiver sections A 10 and B 11, corresponding to the switching pattern A shown in Fig. 4.

As a result, the network returns to the state before the connection between the child stations 3 and 4 was broken, and the parent station processing section 14 in the parent station 1 applies polling to all of the child stations 2 to 8 sequentially, and collects data from each of the child stations 2 to 8.

In this, in case that the connection between the child stations 3 and 4 was broken, when each of the child stations 4 to 7 judges the disconnection of the link with the parent station 1, by setting the predetermined period, showing that each of the child stations 4 to 7 has not received the polling, as the same period, all of the child stations 4 to 7 tries to become the second parent station at the same time. In order to avoid this, the predetermined period, showing that each of the child stations 4 to 7 has not received the polling and being the trigger for starting as the second parent station, is set to be as follows: the closer the child station to the parent station 1 is, the shorter the predetermined period of each child station is. With this, when the disconnection with the parent station 1 occurs, the closest child station to the parent station 1 becomes the second parent station.

Next, referring to Figs. 3A, 3B, 4, and 6, the operation of the second embodiment of the data communication system of the present invention is explained. In Fig. 6, the adjacent stations are connected with the external interfaces A each other or the external interfaces B each other, and the station " a " is the parent station 1 and the stations " b " to " h " are the child stations 2 to 8 in Fig. 3A. The operation at the second embodiment is almost the same at the first embodiment, however, is slightly different from that at the first embodiment.

Since the station " a " is the parent station 1, the process changing section 12 in the station " a " selects the switching pattern C shown in Fig. 4, and executes the switching operation. The process changing section 12 makes the parent station processing section 14 start by connecting the parent station processing section 14 to the transmitter & receiver section A 10. At this time, the transmitter & receiver section B 11 is not used.

The stations " b ", " d ", " f", and " h " are the child stations 2, 4, 6, and 8 respectively, and are the same at the first embodiment shown in Fig. 5. The stations " c ", " e ", and " g " are the child stations 3, 5, and 7 respectively, and each of the process changing sections 12 in the child stations 3, 5, and 7 selects the switching pattern B shown in Fig. 4 and executes the switching operation. And the process changing section 12 in the child stations 3, 5, 7 sets the transmitter & receiver section A 10 in the non-using state and the transmitter & receiver section B 11 in the using state. And the process changing section 12 in the child stations 3, 5, 7 makes the child station processing section 13 start by connecting the child station processing section 13 to the transmitter & receiver section B 11.

With this, the operation that the parent station 1 collects data from each of the child stations 2 to 8, the operation at the time when the link between the parent station 1 and one of the child stations 2 to 8 was disconnected, and the operation at the time when the connection between the parent station 1 and the one of the child stations 2 to 8 was recovered from the disconnection, are executed by the same operation at the first embodiment shown in Fig. 5.

As mentioned above, according to the present invention, in the data communication system, plural stations having two two-directional external interfaces are connected in series, and a predetermined station in the plural stations is made to be a parent station, and the other stations in the plural stations are made to be child stations. And the parent station collects data from each of the child stations by applying polling to each of the child stations, and when each of the child stations receives the polling from the parent station, each of the child stations transmits the data of its own station to the station (parent station) being the source of the polling. When a child station has not received the polling for a predetermined period, the child station keeps the function as the child station and also collects the data from the child stations following its own child station as the second parent station. And when the child station being the second parent station received polling for its own station, the child station being the second parent station stops working as the second parent station. With the system mentioned above, each of the child stations, except a child station located at the end of the network, becomes the second parent station for the child stations following its own child station, when its own child station has not receive polling for a predetermined period decided for each of the child stations. And the child station being the second parent station collects data from the following child stations. Therefore, when a child station does not receive polling from the parent station caused by a disconnection, the child station becomes the second parent station and can collect data from the following child stations.

While the present invention has been described with reference to the particular illustrative embodiments, it is not to be restricted by those embodiments but only by the appended claims. It is to be appreciated that those skilled in the art can change or modify the embodiments without departing from the scope of the present invention.

Thetextofthe abstract filed herewith is repeated here as part of the specification.

A data communication system, in which, even when communication between a child station and a parent station is broken by the child station not receiving polling from the parent station caused by a disconnection, data from child stations following the child station whose communication was broken can be collected. In a data communication system, plural stations having a pair of two-directional external interfaces are connected in series, and a parent station collects data from each of the child stations by polling. When one of the child stations has not received the polling for a predetermined period, that child station stays as a child station by using a first external interface, a first transmitter & receiver section, and a child-station processing section, and also works as a second parent station that collects data from following child stations by applying the polling to following child stations, by using a second external interface, a second transmitter and receiver section, and a parent-station processing section.

## Claims

1. A data communication system, comprising three or more stations (1, 2, 3, ...) connected in series, each station comprising:
a pair of two-directional external interfaces (15,16), each interface connecting to an external interface of an adjacent station;
a pair of transmitter-and-receiver sections (10,11) each section transmitting and receiving data by connecting to a respective one of said pair of two-directional external interfaces (15,16);
a switching section (9) for switching transmission lines and reception lines between said pair of two-directional external interfaces (15,16) and said pair of transmitter-and-receiver sections (10,11) according to a switching request; and,
a process-changing section (12) that has a plurality of predetermined switching patterns and selects one of said switching patterns corresponding to a parent or child state assigned to its own station, and outputs said switching request based on a selected one of said switching patterns, and sets each transmitter-and-receiversection in an operative state or a non-operative state, and when one or both transmitter-and-receiversections is in the operative state, changes the process determining whether data received at that one or both transmitter-and-receiver sections are processed for a parent station or a child station;
wherein:
initially, a predetermined one of the stations is assigned to be a parent station (1), and the other stations (2,3,... ) are each assigned to be a child station for said parent station;
said parent station (1) utilizes one (16) of its external interfaces to poll each of said child stations (2,3,... ); and,
upon being polled by said parent station (1), each of said child stations (2,3, ...) utilizes one (15) of its external interfaces to transmit data of its own station to said parent station (1);
**characterized in that**:
when one (3) of said child stations, other than the child station (8) most remote from the parent station (1), has not been polled for a predetermined period by said parent station (1), that particular child station (3), whilst remaining as a child station, also works as a second parent station by utilizing the other (16) of its external interfaces to poll a child station (4) or stations (4,5,...) more remote from the parent station (1) than the particular child station (3); and,
when said particular child station (3) is polled by said parent station (1) after starting to work as the second parent station, said particular child station (3) stops working as the second parent station.

2. A data communication system in accordance with claim 1, wherein said parent station (1) is located as an end one of said stations connected in series.

3. A data communication system in accordance with claim 2, wherein the closer in serial connection said particular child station (3) is to said parent station (1), the shorter is said predetermined period.

4. A data communication system in accordance with any preceding claim, wherein each station (1,2,3...) further comprises:
a parent-station processing section (14) having afunction of, when said station functions as a parent station, applying polling sequentially to each child station, and collecting data from each of said child stations by said polling; and,
a child-station processing section (13) having a function of transmitting, upon being polled, data of its own station to a polling-source station;
and wherein:
when said data, which is received at one of said pair of transmitter-and-receiver sections (10,11) in the operative state, is processed by a station acting as a parent station, said process-changing section (12) connects that transmitter-and-receiver section to said parent-station processing section (14); and,
when said data, which is received at one of said pair of transmitter-and-receiver sections (10,11) in the operative state, is processed bya station acting as a child station, said process-changing section (12) connects that transmitter-and-receiver section to said child-station processing section (13).

5. A data communication system in accordance with any preceding claim, wherein:
said process-changing section (12) selects one of said plurality of switching patterns, based on whether its own station is said parent station or one of said child stations and on the position of its own station in said stations connected in series, and on whether a two-directional external interface (15) of its own station and a connected two-directional interface (15) of an adjacent station are in a same direction.

6. A data communication system in accordance with claim 1, wherein:
one (15) of said pair (15,16) of two-directional external interfaces of each station is a first external interface, and the other (16) of said pair of two-directional external interfaces of each station is a second external interface;
one (10) of said pair (10,11) of transmitter-and-receiver sections of each station is a first transmitter-and-receiver section that receives data from said first external interface and transmits data to said second external interface; and,
the other (11) of said pair of transmitter-and-receiver sections (10,11) is a second transmitter-and-receiver section that receives data from said second external interface and transmits data to said first external interface.

7. A data communication system in accordance with claim 6, wherein said plurality of predetermined switching patterns of said process-changing section include:
a first switching pattern selectable for stations acting as child stations, in which the reception line of said first external interface (15) is connected to the reception line of said first transmitter-and-receiver section (10) and to the transmission line of said second external interface (16), and the reception line of said second external interface (16) and the transmission line of said first transmitter-and-receiver section (10) are connected to the transmission line of said first external interface (15), and said first transmitter-and-receiver section (10) is made to be in the operative state and said second transmitter-and-receiver section (11) is made to be in the non-operative state;
a second switching pattern selectable for stations acting as child stations, in which the reception line of said first external interface (15) and the transmission line of said second transmitter-and-receiver section (11) are connected to the transmission line of said second external interface (16), and the reception line of said second external interface (16) is connected to the reception line of said second transmitter-and-receiver section (14) and the transmission line of said first external interface (15), and said first transmitter-and-receiver section (10) is made to be in the non-operative state and the second transmitter-and-receiver section (11) is made to be in the operative state; and,
a third switching pattern selectable for a station acting as a parent station or a second parent station, or for a child station located as an end one of said stations connected in series, in which the reception line of said first external interface (15) is connected to the reception line of said first transmitter-and- receiver section (10), and the transmission line of said first transmitter-and-receiver section (10) is connected to the transmission line of said first external interface (15), and the reception line of said second external interface (16) is connected to the reception line of said second transmitter-and-receiver section (11), and the transmission line of said second transmitter-and-receiver section (11) is connected to the transmission line of said second external interface (16), and both of said first and second transmitter-and-receiver sections (10,11) are made to be in the operative state.

8. A data communication system in accordance with claim 7, wherein:
the particular station (3), which is initially assigned to be a child station, is adapted to switch said transmission and reception lines at its said process-changing section (12) for using said third switching pattern, and to connect, to its parent-station processing section (14), said transmitter-and-receiver section (16) on the side connectingtothe more-remote child station or stations, and then to work as said second parent station.

9. A data communication system in accordance with claim 8, wherein:
each of said stations that is to work as a child station (2, 3,...) is adapted to switch said transmission-and-reception lines at its respective process-changing section (12) by using said first or second switching pattern, and to connect that one (10) of its transmitter-and-receiver sections that is in the operative state to said child-station processing section (13), and then to work as a child station.

10. A data communication system in accordance with claim 8 or 9, wherein the process-changing section (12) of said particular child station (3) functions such that:
when the particular child station (3) has not been polled via said transmitter-and-receiver section (10) in the operative state for a predetermined period, a processing section of said particular child station (3) informs the process-changing section (12) of said particular child station (3) that there has been no such polling, and when said particular child station (3) is afterwards polled, said processing section informs said process-changing section (12) that said polling has recommenced;
when said process-changing section (12) of said particular child station (3) is informed by the processing section that said particular child station (3) has not been polled, the process-changing section executes switching based on said third switching pattern, and connects said parent-station processing section (14) to said transmitter-and-receiver section (11) that has been newly-set to be in the operative state; and,
when said process-changing section (12) of said particular child station (3) is informed by the processing section that said particular child station (3) has started to again be polled, the process-changing section (12) executes switching based on said first or second switching pattern, and returnstothe state that existed before execution of the third switching pattern, by disconnecting said parent-station processing section (14) from said transmitter-and-receiver section (11) that was newly-set to be in the operative state;
and wherein the particular child station functions such that:
when said parent-station processing section (14) is connected to saidtransmitter-and-receiversection (11) that was newly-set to be in the operative state, said particular child station (3) collects data from said child station (4) or stations (4,5...) more remote than said particular child station (3) by polling as said second parentstation; and,
when said transmitter-and-receiver section (11) that was newly-set to be in the operative state is disconnected by said process-changing section (12), said particularchild station (3) stops working as said second parent station.

## Patentansprüche

1. Datenkommunikationssystem mit drei oder mehr in Serie geschalteten Stationen (1, 2, 3, ...), wobei jede Station aufweist:
ein Paar bidirektionale externe Schnittstellen (15, 16), wobei jede Schnittstelle mit einer externen Schnittstelle einer Nachbarstation verbunden ist;
ein Paar Sender- und Empfangsabschnitte (10, 11), wobei jeder Abschnitt Daten über eine Verbindung mit einer entsprechenden des Paars bidirektionaler externer Schnittstellen (15, 16) überträgt und empfängt;
einen Schaltabschnitt (9) zum Schalten von Sendeleitungen und Empfangsleitungen zwischen dem Paar bidirektionalen externen Schnittstellen (15, 16) und dem Paar Sender- und Empfangsabschnitten (10, 11) gemäß einer Schaltanforderung; und
einen Prozessänderungsabschnitt (12), der mehrere vorgegebene Schaltmuster aufweist und eines der Schaltmuster auswählt, das einem seiner eigenen Station zugewiesenen Eltern- oder Kindzustand entspricht, und die Schaltanforderung basierend auf einem ausgewählten der Schaltmuster ausgibt und jeden Sender- und Empfangsabschnitt auf einen aktivierten Zustand oder einen deaktivierten Zustand einstellt, und, wenn einer oder beide der Sender- und Empfangsabschnitte auf den aktivierten Zustand eingestellt sind, den Prozess in Abhängigkeit davon ändert, ob Daten, die an dem einen oder an beiden der Sender- und Empfangsabschnitte empfangen werden, für eine Elternstation oder eine Kindstation verarbeitet werden, wobei:
anfangs eine vorgegebene der Stationen als eine Elternstation (1) bestimmt wird und die anderen Stationen (2, 3, ...) jeweils als eine Kindstation für die Elternstation bestimmt werden,
die Elternstation (1) eine (16) ihrer externen Schnittstellen zum Abfragen jeder der Kindstationen (2, 3, ...) verwendet, und
jede der Kindstationen (2, 3, ...), nachdem sie durch die Elternstation (1) abgefragt wurde, eine (15) ihrer externen Schnittstellen verwendet, um Daten ihrer eigenen Station an die Elternstation (1) zu übertragen;
**dadurch gekennzeichnet, dass**
wenn eine (3) der Kindstationen, die von der Kindstation (8) verschieden ist, die am weitesten von der Elternstation (1) entfernt ist, für eine vorgegebene Zeitdauer durch die Elternstation (1) nicht abgefragt worden ist, diese spezifische Kindstation (3), während sie eine Kindstation bleibt, auch als eine zweite Elternstation fungiert, indem sie die andere (16) ihrer externen Schnittstellen verwendet, um eine Kindstation (4) oder Kindstationen (4, 5) abzufragen, die weiter von der Elternstation (1) entfernt sind als die spezifische Kindstation (3); und
wenn die spezifische Kindstation (3) durch die Elternstation (1) abgefragt wird, nachdem sie begonnen hat als die zweite Elternstation zu fungieren, die spezifische Kindstation (3) ihre Funktion als zweite Elternstation stoppt.

2. System nach Anspruch 1, wobei die Elternstation (1) eine endseitige der in Serie geschalteten Stationen ist.

3. System nach Anspruch 2, wobei die vorgegebene Zeitdauer umso kürzer ist, je näher die spezifische Kindstation (3) in der Serienschaltung zur Elternstation (1) angeordnet ist.

4. System nach einem der vorangehenden Ansprüche, wobei jede Station (1, 2, 3, ...) ferner aufweist:
einen Elternstationsverarbeitungsabschnitt (14) mit einer Funktion zum Ausführen einer sequentiellen Abfrage jeder der Kindstationen und Sammeln von Daten von jeder der Kindstationen durch die Abfrage, wenn die Station als eine Elternstation fungiert; und
einen Kindstationsverarbeitungsabschnitt (13) mit einer Funktion zum Übertragen von Daten der eigenen Station, wenn sie abgefragt wird, zu einer Abfragequellenstation,
wobei,
wenn die Daten, die an einem des Paars Sender- und Empfangsabschnitte (10, 11) im aktivierten Zustand empfangen werden, durch eine als eine Elternstation fungierende Station verarbeitet werden, der Prozessänderungsabschnitt (12) den Sender- und Empfangsabschnitt mit dem Elternstationsverarbeitungsabschnitt (14) verbindet, und
wenn die Daten, die an einem des Paars Sender- und Empfangsabschnitte (10, 11) im aktivierten Zustand empfangen werden, durch eine als eine Kindstation fungierende Station verarbeitet werden, der Prozessänderungsabschnitt (12) den Sender- und Empfangsabschnitt mit dem Kindstationsverarbeitungsabschnitt (13) verbindet.

5. System nach einem der vorangehenden Ansprüche, wobei
der Prozessänderungsabschnitt (12) eines der mehreren Schaltmuster basierend darauf auswählt, ob seine eigene Station die Elternstation oder eine der Kindstationen ist, und basierend auf der Position seiner eigenen Station in den in Serie geschalteten Stationen und basierend darauf, ob eine bidirektionale externe Schnittstelle (15) seiner eigenen Station und eine verbundene bidirektionale externe Schnittstelle (15) einer Nachbarstation in die gleiche Richtung geschaltet sind.

6. System nach Anspruch 1, wobei:
eine (15) des Paars (15, 16) bidirektionaler externer Schnittstellen jeder Station eine erste externe Schnittstelle und die andere (16) des Paars bidirektionaler externer Schnittstellen jeder Station eine zweite externe Schnittstelle ist,
eine (10) des Paars (10, 11) von Sender- und Empfangsabschnitten jeder Station ein erster Sender- und Empfangsabschnitt ist, der Daten von der ersten externen Schnittstelle empfängt und Daten an die zweite externe Schnittstelle überträgt, und
die andere (11) des Paars (10, 11) von Sender- und Empfangsabschnitten jeder Station ein zweiter Sender- und Empfangsabschnitt ist, der Daten von der zweiten externen Schnittstelle empfängt und Daten an die erste externe Schnittstelle überträgt.

7. System nach Anspruch 6, wobei die mehreren vorgegebenen Schaltmuster des Prozessänderungsabschnitts aufweisen:
ein erstes Schaltmuster, das für als Kindstationen fungierende Stationen auswählbar ist, wobei die Empfangsleitung der ersten externen Schnittstelle (15) mit der Empfangsleitung des ersten Sender- und Empfängerabschnitts (10) und mit der Sendeleitung der zweiten externen Schnittstelle (16) verbunden ist, und wobei die Empfangsleitung der zweiten externen Schnittstelle (16) und die Sendeleitung des ersten Sender- und Empfängerabschnitts (10) mit der Sendeleitung der ersten externen Schnittstelle (15) verbunden sind, und wobei der erste Sender- und Empfangsabschnitt (10) auf den aktiven Zustand und der zweite Sender- und Empfängerabschnitt (11) auf den inaktiven Zustand eingestellt sind;
ein zweites Schaltmuster, das für als Kindstationen fungierende Stationen auswählbar ist, wobei die Empfangsleitung der ersten externen Schnittstelle (15) und die Sendeleitung des zweiten Sender- und Empfängerabschnitts (11) mit der Sendeleitung der zweiten externen Schnittstelle (16) verbunden sind, und wobei die Empfangsleitung der zweiten externen Schnittstelle (16) mit der Empfangsleitung des zweiten Sender- und Empfängerabschnitts (11) und mit der Sendeleitung der ersten externen Schnittstelle (15) verbunden ist, und wobei der erste Sender- und Empfängerabschnitt (10) auf den inaktiven Zustand und der zweite Sender- und Empfängerabschnitt (11) auf den aktiven Zustand eingestellt sind;
ein drittes Schaltmuster, das für eine als Elternstation oder als eine zweite Elternstation fungierende Station oder für eine Kindstation auswählbar ist, die eine endseitige Station der in Serie geschalteten Stationen ist, wobei die Empfangsleitung der ersten externen Schnittstelle (15) mit der Empfangsleitung des ersten Sender- und Empfängerabschnitts (10) verbunden ist, die Sendeleitung des ersten Sender- und Empfängerabschnitts (10) mit der Sendeleitung der ersten externen Schnittstelle (15) verbunden sind, und wobei die Empfangsleitung der zweiten externen Schnittstelle (16) mit der Empfangsleitung des zweiten Sender- und Empfängerabschnitts (11) verbunden ist, und wobei die Sendeleitung des zweiten Sender- und Empfängerabschnitts (11) mit der Sendeleitung der zweiten externen Schnittstelle (16) verbunden ist, und wobei sowohl der erste als auch der zweite Sender- und Empfängerabschnitt (10, 11) auf den aktiven Zustand eingestellt sind.

8. System nach Anspruch 7, wobei:
die spezifische Station (3), die anfangs als eine Kindstation bestimmt wurde, dazu geeignet ist, die Sende- und Empfangsleitungen an ihrem Prozessänderungsabschnitt (12) zu schalten, um das dritte Schaltmuster zu verwenden, und den Sender- und Empfangsabschnitt (16) auf der Seite, die mit der weiter entfernten Kindstationen oder -stationen verbunden ist, mit ihrem Elternstationsverarbeitungsabschnitt (14) zu verbinden und dann als die zweite Elternstation zu fungieren.

9. System nach Anspruch 8, wobei:
jede der Stationen, die als eine Kindstation (2, 3, ...) fungieren soll, dazu geeignet ist, die Sende- und Empfangsleitungen an ihrem jeweiligen Prozessänderungsabschnitt (12) unter Verwendung des ersten oder des zweiten Schaltmusters zu schalten und den einen (10) ihrer Sender- und Empfängerabschnitte, der auf einen aktiven Zustand eingestellt ist, mit dem Kindstationsverarbeitungsabschnitt (13) zu verbinden und dann als eine Kindstation zu fungieren.

10. System nach Anspruch 8 oder 9, wobei der Prozessänderungsabschnitt (12) der spezifischen Kindstation (3) derart fungiert, dass:
wenn die spezifische Kindstation (3) über den Sender- und Empfängerabschnitt (10) im aktiven Zustand für eine vorgegebene Zeitdauer nicht abgefragt worden ist, ein Verarbeitungsabschnitt der spezifischen Kindstation (3) den Prozessänderungsabschnitt (12) der spezifischen Kindstation (3) darüber informiert, dass eine derartige Abfrage nicht stattgefunden hat, und wenn die spezifische Kindstation (3) anschließend abgefragt wird, der Verarbeitungsabschnitt den Prozessänderungsabschnitt (12) darüber informiert, dass die Abfrage wieder aufgenommen wurde;
wenn der Prozessänderungsabschnitt (12) der spezifischen Kindstation (3) durch den Verarbeitungsabschnitt darüber informiert wird, dass die spezifische Kindstation (3) nicht abgefragt worden ist, der Prozessänderungsabschnitt einen Schaltvorgang basierend auf dem dritten Schaltmuster ausführt und den Elternstationsverarbeitungsabschnitt (14) mit dem Sender- und Empfängerabschnitt (11) verbindet, der neu auf den aktiven Zustand eingestellt worden ist; und
wenn der Prozessänderungsabschnitt (12) der spezifischen Kindstation (3) durch den Verarbeitungsabschnitt darüber informiert wird, dass die Abfrage der spezifischen Kindstation (3) wieder aufgenommen worden ist, der Prozessänderungsabschnitt (12) einen Schaltvorgang basierend auf dem ersten oder zweiten Schaltmuster ausführt und auf den Zustand zurückkehrt, der vor der Ausführung des dritten Schaltmusters vorgelegen hat, indem die Verbindung zwischen dem Elternstationsverarbeitungsabschnitt (14) und dem Sender- und Empfängerabschnitt (11) unterbrochen wird, der neu auf den aktiven Zustand eingestellt worden ist; und
wobei die spezifische Kindstation derart fungiert, dass
wenn der Elternstationsverarbeitungsabschnitt (14) mit dem Sender- und Empfängerabschnitt (11) verbunden ist, der neu auf den aktiven Zustand eingestellt wurde, die spezifische Kindstation (3) in der Funktion als die zweite Elternstation durch eine Abfrage Daten von der Kindstation (4) oder von Kindstationen (4, 5, ...) sammelt, die weiter entfernt sind als die spezifische Kindstation; und
wenn die Verbindung des Sender- und Empfängerabschnitts (11), der neu auf den aktivierten Zustand eingestellt wurde, durch den Prozessänderungsabschnitt (12) unterbrochen wird, die spezifische Kindstation (3) aufhört als die zweite Elternstation zu fungieren.

## Revendications

1. Système de communication de données, comprenant trois stations ou plus (1, 2, 3, ...) connectées en série, chaque station comprenant :
une paire d'interfaces externes bidirectionnelles (15, 16), chaque interface se connectant à une interface externe d'une station adjacente ;
une paire de sections d'émetteur-et-récepteur (10, 11), chaque section transmettant et recevant des données en se connectant à une interface respective de ladite paire d'interfaces externes bidirectionnelles (15, 16) ;
une section de commutation (9) pour commuter des lignes de transmission et des lignes de réception entre ladite paire d'interfaces externes bidirectionnelles (15, 16) et ladite paire de sections d'émetteur-et-récepteur (10, 11) en fonction d'une demande de commutation ; et,
une section de changement de processus (12) qui a une pluralité de modèles de commutation prédéterminés et sélectionne un desdits modèles de commutation correspondant à un état parent ou enfant affecté à sa propre station, et sort ladite demande de commutation sur la base d'un modèle sélectionné desdits modèles de commutation, et établit chaque section d'émetteur-et-récepteur dans un état opérationnel ou un état non opérationnel, et lorsque une ou les deux sections d'émetteur-et-récepteur sont dans l'état opérationnel, change le processus déterminant si des données reçues au niveau de ces une ou deux sections d'émetteur-et-récepteur sont traitées pour une station parent ou une station enfant ;
dans lequel :
initialement, une station prédéterminée des stations est affectée pour être une station parent (1), et les autres stations (2, 3, ...) sont chacune affectées pour être une station enfant pour ladite station parent ;
ladite station parent (1) utilise une (16) de ses interfaces externes pour interroger chacune desdites stations enfants (2, 3, ...) ; et,
lorsqu'elle est interrogée par ladite station parent (1), chacune desdites stations enfants (2, 3, ...) utilise une (15) de ses interfaces externes pour transmettre des données de sa propre station à ladite station parent (1) ;
**caractérisé en ce que** :
lorsqu'une (3) desdites stations enfants, autres que la station enfant (8) la plus éloignée de la station parent (1), n'a pas été interrogée pendant une période prédéterminée par ladite station parent (1), cette station enfant particulière (3), tout en restant comme une station enfant, fonctionne également comme une seconde station parent en utilisant l'autre (16) de ses interfaces externes pour interroger une station enfant (4) ou des stations enfants (4, 5, ...) plus éloignées de la station parent (1) que la station enfant particulière (3) ; et,
lorsque ladite station enfant particulière (3) est interrogée par ladite station parent (1) après avoir commencé à fonctionner comme la seconde station parent, ladite station enfant particulière (3) arrête de fonctionner comme la seconde station parent.

2. Système de communication de données selon la revendication 1, dans lequel ladite station parent (1) est située comme une station terminale desdites stations connectées en série.

3. Système de communication de données selon la revendication 2, dans lequel plus ladite station enfant particulière (3) est proche en connexion série de ladite station parent (1), plus courte est ladite période prédéterminée.

4. Système de communication de données selon l'une quelconque des revendications précédentes, dans lequel chaque station (1, 2, 3 ...) comprend en outre :
une section de traitement de station parent (14) ayant une fonction consistant à, lorsque ladite station fonctionne comme une station parent, appliquer l'interrogation séquentiellement à chaque station enfant, et collecter des données à partir de chacune desdites stations enfants par ladite interrogation ; et,
une section de traitement de station enfant (13) ayant une fonction consistant à transmettre, lorsqu'elle est interrogée, des données de sa propre station à une station source d'interrogation ;
et dans lequel :
lorsque lesdites données, qui sont reçues au niveau d'une de ladite paire de sections d'émetteur-et-récepteur (10, 11) dans l'état opérationnel, sont traitées par une station jouant le rôle d'une station parent, ladite section de changement de processus (12) connecte cette section d'émetteur-et-récepteur à ladite section de traitement de station parent (14) ; et,
lorsque lesdites données, qui sont reçues au niveau d'une de ladite paire de sections d'émetteur-et-récepteur (10, 11) dans l'état opérationnel, sont traitées par une station jouant le rôle d'une station enfant, ladite section de changement de processus (12) connecte cette section d'émetteur-et-récepteur à ladite section de traitement de station enfant (13).

5. Système de communication de données selon l'une quelconque des revendications précédentes, dans lequel :
ladite section de changement de processus (12) sélectionne un de ladite pluralité de modèles de commutation, sur la base de si sa propre station est ladite station parent ou une desdites stations enfants et de la position de sa propre station dans lesdites stations connectées en série, et de si une interface externe bidirectionnelle (15) de sa propre station et une interface bidirectionnelle connectée (15) d'une station adjacente sont dans une même direction.

6. Système de communication de données selon la revendication 1, dans lequel :
une (15) de ladite paire (15, 16) d'interfaces externes bidirectionnelles de chaque station est une première interface externe, et l'autre (16) de ladite paire d'interfaces externes bidirectionnelles de chaque station est une seconde interface externe ;
une (10) de ladite paire (10, 11) de sections d'émetteur-et-récepteur de chaque station est une première section d'émetteur-et-récepteur qui reçoit des données de ladite première interface interne et transmet des données à ladite seconde interface externe ; et,
l'autre (11) de ladite paire de sections d'émetteur-et-récepteur (10, 11) est une seconde section d'émetteur-et-récepteur qui reçoit des données de ladite seconde interface externe et transmet des données à ladite première interface externe.

7. Système de communication de données selon la revendication 6, dans lequel ladite pluralité de modèles de commutation prédéterminés de ladite section de changement de processus comprennent :
un premier modèle de commutation sélectionnable pour des stations jouant le rôle de stations enfants, dans lequel la ligne de réception de ladite première interface externe (15) est connectée à la ligne de réception de ladite première section d'émetteur-et-récepteur (10) et à la ligne de transmission de ladite seconde interface externe (16), et la ligne de réception de ladite seconde interface externe (16) et la ligne de transmission de ladite première section d'émetteur-et-récepteur (10) sont connectées à la ligne de transmission de ladite première interface externe (15), et ladite première section d'émetteur-et-récepteur (10) est amenée à être dans l'état opérationnel et ladite seconde section d'émetteur-et-récepteur (11) est amenée à être dans l'état non opérationnel ;
un deuxième modèle de commutation sélectionnable pour des stations jouant le rôle de stations enfants, dans lequel la ligne de réception de ladite première interface externe (15) et la ligne de transmission de ladite seconde section d'émetteur-et-récepteur (11) sont connectées à la ligne de transmission de ladite seconde interface externe (16), et la ligne de réception de ladite seconde interface externe (16) est connectée à la ligne de réception de ladite seconde section d'émetteur-et-récepteur (14) et la ligne de transmission de ladite première interface externe (15), et ladite première section d'émetteur-et-récepteur (10) est amenée à être dans l'état non opérationnel et la seconde section d'émetteur-et-récepteur (11) est amenée à être dans l'état opérationnel ; et,
un troisième modèle de commutation sélectionnable pour une station jouant le rôle d'une station parent ou d'une seconde station parent, ou pour une station enfant située comme une station terminale desdites stations connectées en série, dans lequel la ligne de réception de ladite première interface externe (15) est connectée à la ligne de réception de ladite première section d'émetteur-et-récepteur (10), et la ligne de transmission de ladite première section d'émetteur-et-récepteur (10) est connectée à la ligne de transmission de ladite première interface externe (15), et la ligne de réception de ladite seconde interface externe (16) est connectée à la ligne de réception de ladite seconde section d'émetteur-et-récepteur (11), et la ligne de transmission de ladite seconde section d'émetteur-et-récepteur (11) est connectée à la ligne de transmission de ladite seconde interface externe (16), et les deux dites première et seconde sections d'émetteur-et-récepteur (10, 11) sont amenées à être dans l'état opérationnel.

8. Système de communication de données selon la revendication 7, dans lequel :
la station particulière (3), qui est initialement affectée pour être une station enfant, est adaptée pour commuter lesdites lignes de transmission et de réception au niveau de sa dite section de changement de processus (12) pour utiliser ledit troisième modèle de commutation, et pour connecter, à sa section de traitement de station parent (14), ladite section d'émetteur-et-récepteur (16) du côté se connectant à la station enfant ou aux stations enfants plus éloignées, et ensuite pour fonctionner comme ladite seconde station parent.

9. Système de communication de données selon la revendication 8, dans lequel :
chacune desdites stations qui doit fonctionner comme une station enfant (2, 3, ...) est adaptée pour commuter lesdites lignes de transmission-et-réception au niveau de sa section de changement de processus respective (12) en utilisant ledit premier ou deuxième modèle de commutation, et pour connecter cette une (10) de ses sections d'émetteur-et-récepteur qui est dans l'état opérationnel à ladite section de traitement de station enfant (13), et ensuite pour fonctionner comme une station enfant.

10. Système de communication de données selon la revendication 8 ou 9, dans lequel la section de changement de processus (12) de ladite station enfant particulière (3) fonctionne de sorte que :
lorsque la station enfant particulière (3) n'a pas été interrogée via ladite section d'émetteur-et-récepteur (10) dans l'état opérationnel pendant une période prédéterminée, une section de traitement de ladite station enfant particulière (3) informe la section de changement de processus (12) de ladite station enfant particulière (3) qu'il n'y a pas eu une telle interrogation, et lorsque ladite station enfant particulière (3) est interrogée par la suite, ladite section de traitement informe ladite section de changement de processus (12) que ladite interrogation a recommencé ;
lorsque ladite section de changement de processus (12) de ladite station enfant particulière (3) est informée par la section de traitement que ladite station enfant particulière (3) n'a pas été interrogée, la section de changement de processus exécute la commutation sur la base dudit troisième modèle de commutation, et connecte ladite section de traitement de station parent (14) à ladite section d'émetteur-et-récepteur (11) qui a été nouvellement établie pour être dans l'état opérationnel ; et,
lorsque ladite section de changement de processus (12) de ladite station enfant particulière (3) est informée par la section de traitement que ladite station enfant particulière (3) a commencé à être interrogée à nouveau, la section de changement de processus (12) exécute la commutation sur la base dudit premier ou deuxième modèle de commutation, et retourne à l'état qui a existé avant l'exécution du troisième modèle de commutation, en déconnectant ladite section de traitement de station parent (14) de ladite section d'émetteur-et-récepteur (11) qui a été nouvellement établie pour être dans l'état opérationnel ;
et dans lequel la station enfant particulière fonctionne de sorte que :
lorsque ladite section de traitement de station parent (14) est connectée à ladite section d'émetteur-et-récepteur (11) qui a été nouvellement établie pour être dans l'état opérationnel, ladite station enfant particulière (3) collecte des données à partir de ladite station enfant (4) ou desdites stations enfants (4, 5...) plus éloignées que ladite station enfant particulière (3) en interrogeant comme ladite seconde station parent ; et,
lorsque ladite section d'émetteur-et-récepteur (11) qui a été nouvellement établie pour être dans l'état opérationnel est déconnectée par ladite section de changement de processus (12), ladite station enfant particulière (3) arrête de fonctionner comme ladite seconde station parent.
